# EUROPÄISCHE PATENTSCHRIFT

(11) **EP 3 404 264 B1**
(45) Veröffentlichungstag und Bekanntmachung des Hinweises auf die Patenterteilung: **09.06.2021**
(21) Anmeldenummer: 18167002.7
(22) Anmeldetag: 12.04.2018
(51) Int. Cl.: F04C 27/00, F04C 18/02

(54) **SPIRALVERDICHTER UND SEIN BETRIEBSVERFAHREN**
SPIRAL COMPRESSOR AND ITS OPERATING METHOD
COMPRESEUR À SPIRALE ET SON PROCÉDÉ DE FONCTIONNEMENT

(30) Priorität: 19.05.2017 DE 102017110913
(43) Veröffentlichungstag der Anmeldung: 21.11.2018
(73) Patentinhaber: OET GmbH, 6890 Lustenau (AT)
(72) Erfinder: OBRIST, Frank, 6900 Bregenz (AT); BUSCH, Christian, 6800 Feldkirch (AT); SCHMÄLZLE, Christian, 6923 Lauterach (AT)
(74) Vertreter: Kilchert, Jochen

(56) Entgegenhaltungen:
- EP-A1- 2 479 435
- EP-A1- 2 806 164
- DE-A1- 10 147 339
- KR-B1- 101 442 547

## Beschreibung

Die Erfindung betrifft eine Verdrängermaschine nach dem Spiralprinzip, insbesondere einen Scrollverdichter, mit einem Hochdruckbereich, der eine Hochdruckkammer umfasst, des Weiteren mit einer Niederdruckkammer und einer orbitierenden Verdrängerspirale, die in eine Gegenspirale derart eingreift, dass zwischen der Verdrängerspirale und der Gegenspirale Verdichtungskammern gebildet werden, um ein Arbeitsmedium aufzunehmen, wobei zwischen der Niederdruckkammer und der Verdrängerspirale eine Gegendruckkammer ausgebildet ist. Des Weiteren betrifft die Erfindung ein Verfahren zum Betreiben einer Verdrängermaschine. Außerdem betrifft die Erfindung eine Fahrzeugklimaanlage sowie ein Fahrzeug mit einer erfindungsgemäßen Verdrängermaschine.

Scrollverdichter und/oder Scrollexpander sind aus dem Stand der Technik hinlänglich bekannt. Diese umfassen eine Hochdruckkammer, eine Niederdruckkammer und eine orbitierende Verdrängerspirale. Die orbitierende Verdrängerspirale greift, wie dies beispielsweise in EP 2 806 164 A1 dargestellt ist, in eine Gegenspirale derart ein, dass zwischen der Verdrängerspirale und der Gegenspirale Verdichtungskammern gebildet werden, um ein Arbeitsmedium aufzunehmen. Zwischen der Niederdruckkammer und der Verdrängerspirale ist ein Aufnahmeraum, nämlich eine Gegendruckkammer, ausgebildet. Eine derartige Gegendruckkammer ist auch unter dem Begriff Back-Pressure-Raum bekannt. Mit Hilfe der Gegendruckkammer bzw. mit Hilfe des Back-Pressure-Raums ist es möglich, einen Druck aufzubauen, der auf die orbitierende Verdrängerspirale wirkt. Es entsteht eine resultierende Kraft in axialer Richtung, wodurch die Verdrängerspirale gegen die Gegenspirale gedrückt wird und somit die Spiralen zueinander abgedichtet werden.

In DE 101 47 339 A1 wird ebenfalls ein Spiralverdichter und ein Gasverdichtungsverfahren offenbart. Ein Verbindungsgang verbindet eine Verdichtungskammer und eine Zwischendruckkammer, wobei der Verbindungsgang durch die Basisplatte des bewegbaren Spiralelements ausgebildet ist. Während eines Orbitierwinkels von weniger als 360° steht die Verdichtungskammer mit dem Verdichtungsdurchgang in Verbindung. Der Erfindung liegt die Aufgabe zu Grunde, eine Verdrängermaschine nach dem Spiralprinzip derart weiterzubilden, dass der Druck in der Gegendruckkammer in vorteilhafter Weise selbst einstellbar ist. Es soll ein variables Back-Pressure-System bzw. ein variables Gegendruck-System bereitgestellt werden, wobei der Druck in der Gegendruckkammer aufgrund unterschiedlicher Betriebsdrücke einstellbar ist. Insbesondere soll die Verdrängermaschine derart weitergebildet werden, dass das Verschmutzungsrisiko durch Verunreinigungen im Kältemittel verringert wird. Die Verdrängermaschine soll dabei konstruktiv einfach aufgebaut sein.

Der Erfindung liegt ferner die Aufgabe zu Grunde, ein weiterentwickeltes Verfahren zum Betreiben einer Verdrängermaschine anzugeben. Außerdem besteht die Aufgabe darin, eine Fahrzeugklimaanlage und/oder ein Fahrzeug mit einer weiterentwickelten Verdrängermaschine nach dem Spiralprinzip anzugeben.

Erfindungsgemäß wird diese Aufgabe im Hinblick auf die Verdrängermaschine nach dem Spiralprinzip durch den Gegenstand des Patentanspruches 1, im Hinblick auf das Verfahren zum Betreiben einer Verdrängermaschine durch Patentanspruch 7, im Hinblick auf die Fahrzeugklimaanlage durch den Gegenstand des Patentanspruches 9 und im Hinblick auf das Fahrzeug durch den Gegenstand des Patentanspruches 10 gelöst.

Vorteilhafte und zweckmäßige Ausgestaltungen der erfindungsgemäßen Verdrängermaschine nach dem Spiralprinzip und/oder des erfindungsgemäßen Verfahrens zum Betreiben einer Verdrängermaschine sind in den Unteransprüchen angegeben.

Die Erfindung beruht auf dem Gedanken, eine Verdrängermaschine nach dem Spiralprinzip, insbesondere einen Scrollverdichter, mit einem Hochdruckbereich, der eine Hochdruckkammer umfasst, einer Niederdruckkammer und einer orbitierenden Verdrängerspirale, die in eine Gegenspirale derart eingreift, dass zwischen der Verdrängerspirale und der Gegenspirale Verdichtungskammern gebildet werden, um ein Arbeitsmedium aufzunehmen, anzugeben. Zwischen der Niederdruckkammer und der Verdrängerspirale ist eine Gegendruckkammer bzw. ein sogenannter Back-Pressure-Raum ausgebildet.

Erfindungsgemäß weist die Verdrängerspirale lediglich einen Durchgang auf, der zumindest temporär eine Fluidverbindung zwischen der Gegendruckkammer und zumindest einer der Verdichtungskammern herstellt, wobei der Durchgang in einem derartigen Abschnitt der Verdrängerspirale ausgebildet ist, indem der Durchgang im aktivierten Zustand der Verdrängerspirale bei Erreichen von 85 % - 100 %, insbesondere von 90 % - 100 %, insbesondere von 95 %, des relativen Verdichtungskammervolumens geöffnet ist und während einer nach Öffnung anschließenden Rotation der Verdrängerspirale um einen Rotationswinkel von 120 ° - 360 °, insbesondere von 255 ° - 315 °, insbesondere von 270 °, geöffnet bleibt.

Die Ausbildung lediglich eines Durchgangs bzw. eines einzigen Durchgangs in der Verdrängerspirale bewirkt eine zeitweise Fluidverbindung bzw. Gasverbindung zwischen mindestens einer der Verdichtungskammern und der Gegendruckkammer. Aufgrund dessen kann ein Back-Pressure-System bzw. ein Gegendruck-System zur Verfügung gestellt werden, wobei der Druck in der Gegendruckkammer als Funktion des Hochdrucks und des in mindestens einer Verdichtungskammer herrschenden Drucks einstellbar ist.

Vorzugsweise ist die Gegenspirale vollständig fest in die Verdrängermaschine eingebaut. Mit anderen Worten ist die Gegenspirale somit auch nicht in axialer Richtung beweglich. Die Verdrängerspirale ist relativ zur Gegenspirale in axialer Richtung beweglich. Somit kann die orbitierende Verdrängerspirale zusätzlich in axialer Richtung beweglich sein. Hierbei kann die Verdrängerspirale in Richtung der Gegenspirale und von der Gegenspirale weg bewegt werden.

Ein von der Verdrängerspirale auf die Gegenspirale in axialer Richtung wirkender Anpressdruck ist durch den beschriebenen in der Gegendruckkammer herrschenden Druck einstellbar. Mit anderen Worten wird die von der Verdrängerspirale in axialer Richtung auf die Gegenspirale wirkende Kraft vorzugsweise durch den in der Gegendruckkammer herrschenden Druck bewirkt. In Abhängigkeit von dem in der Gegendruckkammer herrschenden Druck kann ein von der Verdrängerspirale auf die Gegenspirale in axialer Richtung wirkender Anpressdruck eingestellt werden.

Vorzugsweise wirkt die Verdrängerspirale immer mit einem gewissen Anpressdruck auf die Gegenspirale, so dass die Dichtigkeit der Anordnung der beiden Spiralen gewährleistet ist. Der Anpressdruck auf die Gegenspirale ist vorzugsweise derart eingestellt, dass kein höherer Anpressdruck auf die Gegenspirale wirkt, als dieser für die Dichtigkeit im aktuellen Betriebspunkt (Betriebsdrücke/Drehzahl) des Verdichters notwendig ist. Ein diesbezüglich erhöhter Anpressdruck würde zu Leistungseinbußen in der Verdrängermaschine führen.

Zwischen der Verdrängerspirale und der Gegenspirale werden radial nach innen wandernde Verdichtungskammern gebildet, um ein Arbeitsmedium, insbesondere ein Kältemittel, aufzunehmen, zu verdichten und in die Hochdruckkammer auszustoßen. Die Verdrängermaschine arbeitet gemäß dieser Ausführungsform der Erfindung insbesondere als Scrollverdichter. Die Verdrängermaschine ist mit anderen Worten ein Scrollkompressor.

Der lediglich eine bzw. einzige Durchgang der Verdrängerspirale ist vorzugsweise in einem Abschnitt des Bodens der Verdrängerspirale ausgebildet. Dies bedeutet, dass der Durchgang insbesondere nicht in den Spiralflankenabschnitten der Verdrängerspirale ausgebildet ist.

Der lediglich eine bzw. einzige Durchgang ist vorzugsweise als in Bezug auf den Boden der Verdrängerspirale im Wesentlichen senkrecht ausgebildeter Durchgang ausgebildet. Vorzugsweise handelt es sich bei diesem Durchgang um eine Bohrung.

Beispielsweise ist der Durchgang mittig zwischen zwei Flankenabschnitten ausgebildet. Des Weiteren ist es möglich, dass der Durchgang in Relation zu zwei Flankenabschnitten außermittig angeordnet ist.

Der Durchgang ist in einem derartigen Abschnitt, insbesondere in einem derartigen Bodenabschnitt, der Verdrängerspirale ausgebildet, indem der Durchgang im aktivierten Zustand der Verdrängermaschine bei Erreichen von 85 % - 100 %, insbesondere von 90 % - 100 %, insbesondere von 95 %, des relativen Verdichtungskammervolumens geöffnet ist und während einer nach Öffnung anschließenden Rotation der Verdrängerspirale um einen Rotationswinkel von 180 ° - 360 °, insbesondere von 255 ° - 315 °, insbesondere von 270 °, geöffnet bleibt. Mit anderen Worten kann die Verdrängerspirale nach dem Öffnen des ersten Durchgangs um weitere 180 ° - 360 °, insbesondere um weitere 255 ° - 315 °, insbesondere um weitere 270 °, gedreht werden, währenddessen der Durchgang geöffnet bleibt. Ein Öffnungszustand des Durchgangs beschreibt, dass der Durchgang nicht durch die Gegenspirale, insbesondere nicht durch das Spiralelement bzw. durch einen Spiralflankenabschnitt der Gegenspirale, abgedeckt ist.

Aufgrund der erfindungsgemäßen Ausbildung der Verdrängerspirale, insbesondere des lediglich einzigen Durchgangs in der Verdrängerspirale, kann auf eine Verbindung von der Gegendruckkammer zur Niederdruckkammer verzichtet werden. Mit anderen Worten ist die Gegendruckkammer nicht mit der Niederdruckkammer fluidverbunden.

Das Verschmutzungsrisiko durch Verunreinigungen im Kältemittel wird erheblich verringert, da sich das Fluid, insbesondere der Massenstrom, im einzigen Durchgang hin und her bewegt bzw. hin und her strömt. Aufgrund dessen werden Verunreinigungen in diesem Durchgang schneller und einfacher beseitigt.

Da lediglich eine Verbindung bzw. ein Durchgang von mindestens einer Verdichtungskammer zur Gegendruckkammer ausgebildet ist, kann der Druck in der Gegendruckkammer einfach eingestellt werden. Der in der Gegenkammer herrschende Druck ist aufgrund eines vom Hochdruckbereich in die Gegenkammer strömenden Massenstroms und aufgrund eines von einer der Verdichtungskammern in die Gegenkammer strömenden Massenstroms bildbar. Mit anderen Worten erfolgt die Bildung des in der Gegenkammer herrschenden Drucks aufgrund einer Kombination des Massenstroms, der vom Hochdruckbereich in die Gegenkammer strömt, mit dem Massenstrom, der von einer der Verdichtungskammern in die Gegenkammer strömt.

Es ist möglich, dass der Durchgang bei einem Rotationswinkel der Verdrängermaschine von 25 ° - 315 °, insbesondere von 30 ° - 310 °, insbesondere von 35 ° - 305 °, geöffnet ist. Die ersten Gradzahlen der angegebenen Bereiche betreffen immer den Winkel der Verdrängermaschine, der beim Öffnungsvorgang des Durchgangs vorliegt. Die letzten Gradzahlen der angegebenen Bereiche betreffen immer den Winkel der Verdrängermaschine, der (in etwa) bei einem Schließungsvorgang des Durchgangs vorliegt.

Der 0 °-Winkel der Verdrängermaschine beschreibt den Beginn der Verdichtung zwischen der Verdrängerspirale und der Gegenspirale. Der 0 °-Winkel der Verdrängermaschine beschreibt den Zustand, bei dem eine der zumindest zwei Verdichtungskammern geschlossen ist.

Mit anderen Worten ist der lediglich eine bzw. einzige Durchgang in einem derartigen Abschnitt der Verdrängerspirale ausgebildet, dass oben genannte Bedingungen hinsichtlich der Öffnung bzw. Öffnungszeitpunktes sowie der Schließung bzw. des Schließungszeitpunktes erreicht werden können. In Abhängigkeit der Größe der Verdrängermaschine können somit unterschiedliche geometrische Ausbildungen hinsichtlich der Anordnung des Durchgangs konstruiert sein. Für die genannten Bedingungen hinsichtlich der Zeitpunkte der Öffnung und Schließung der Durchgänge gilt jedoch für alle zu konstruierenden Verdrängermaschinen das oben Genannte.

Vorzugsweise ist der Durchgang mindestens bei einem Rotationswinkel von 10 °, insbesondere von mindestens 20 °, insbesondere von mindestens 30 °, vor Erreichen des Ausschiebewinkels (sogenannter discharge angle) geschlossen. Der Ausschiebewinkel bzw. discharge angle beschreibt den Rotationswinkel, bei dem das in den Verdichtungskammern verdichtete Gas in die Hochdruckkammer ausreichend ausgeschoben wurde und der Druck in der Verdichtungskammer entsprechend schlagartig abnimmt. Mit anderen Worten wird vor Erreichen der discharge angle, insbesondere mindestens 10 ° vor Erreichen des discharge angle, insbesondere mindestens 20 ° vor Erreichen des discharge angle, insbesondere mindestens 30 ° vor Erreichen des discharge angle, der Durchgang geschlossen. Das bedeutet, dass verdichtetes Gas, das in den Verdichtungskammern vorliegt, jedoch nicht in die Hochdruckkammer ausgeschoben wurde, in der Verdichtungskammer bleibt. Dieses restliche verdichtete Gas, das nicht ausgeschoben bzw. ausgestoßen wurde, kann daher nicht in die Gegendruckkammer bzw. nicht in den Back-Pressure-Raum gelangen. Daher ist der Durchgang rechtzeitig vor Erreichen des Ausschiebewinkels bzw. des discharge angles, zu schließen.

Zwar ist der Back-Pressure bzw. Gegendruck immer höher als die entgegenwirkende Axialkraft aufgrund der in den Verdichtungskammern herrschenden verdichteten hohen Drücke, jedoch kann der Back-Pressure-Druck in unterschiedlichen Betriebsphasen geringer eingestellt werden, als dies mit herkömmlichen Verdrängermaschinen der Fall ist, so dass mit Hilfe der erfindungsgemäßen Verdrängermaschine ein effektiver Verdichtungsprozess realisiert werden kann.

Im aktivierten Zustand der Verdrängermaschine, d.h. bei einer orbitierenden Bewegung der Verdrängerspirale in der Gegenspirale, werden mehrere Verdichtungskammern gebildet, deren Raum vom äußeren radialen Umfang der Verdrängerspirale hin zur Mitte kleiner werden, so dass das am Umfang aufgenommene Kältemittelgas verdichtet wird. Der Verdichtungsenddruck wird in dem axialen Bereich der Verdrängerspirale, insbesondere in dem mittleren Abschnitt der Verdrängerspirale erreicht, und das Kältemittelgas bei erreichtem Hochdruck axial abgegeben. Hierzu weist die Gegenspirale eine Öffnung auf, so dass eine Fluidverbindung zum Hochdruckbereich, insbesondere zur Hochdruckkammer, gebildet wird.

Die temporäre Fluidverbindung zwischen der Gegendruckkammer und zumindest einer der Verdichtungskammern wird durch die Anordnung des Durchgangs und die orbitierende Bewegung der Verdrängerspirale ermöglicht.

Die Verdrängermaschine ist erfindungsgemäß derart ausgebildet, dass vom Hochdruckbereich der Verdrängermaschine zu der Gegendruckkammer eine Gasverbindungsleitung ausgebildet ist. Beispielsweise ist die Gasverbindungsleitung von der Hochdruckkammer zur Gegendruckkammer ausgebildet. Die Gasverbindungsleitung kann in der Gegenspirale ausgebildet sein und die Hochdruckkammer mit der Gegendruckkammer verbinden. In einer weiteren Ausführungsform der Erfindung kann die Gasverbindungsleitung im Gehäuse der Verdrängermaschine ausgebildet sein.

Des Weiteren kann ausgehend vom Hochdruckbereich der Verdrängermaschine zur Niederdruckkammer ein Ölrückführungskanal ausgebildet sein. Es kann somit eine Trennung der Ölströmung von der Kältemittelgasströmung innerhalb des Verdichtungsprozesses realisiert werden. Der Ölrückführungskanal ist mit anderen Worten vorzugsweise von der Gasverbindungsleitung separiert.

Das Kühlmittel wird im Anfangsbereich der Spirale angesaugt und nur in Richtung des Verdichtungsprozesses zwischen den beiden Spiralen, d.h. zwischen der Verdrängerspirale und der Gegenspirale gefördert bzw. transportiert. Der Massenstrom kann nicht von der Gegendruckkammer in den Niederdruckbereich, insbesondere nicht in die Niederdruckkammer, gelangen. Aufgrund dessen kann ein variables Back-Pressure-System bzw. ein variables Gegendruck-System zur Verfügung gestellt werden.

Die erfindungsgemäße Verdrängermaschine kann als elektrisch und/oder elektromotorisch angetriebene Verdrängermaschine, oder als Verdrängermaschine mit mechanischem Antrieb ausgebildet sein.

Ein weiterer Aspekt der Erfindung betrifft ein Verfahren zum Betreiben einer erfindungsgemäßen Verdrängermaschine. Das Verfahren beruht darauf, dass der Durchgang bei Erreichen von 85 % - 100 %, insbesondere von 90 % - 100 %, insbesondere von 95 %, des relativen Verdichtungskammervolumens geöffnet wird und während einer nach Öffnung anschließenden Rotation der Verdrängerspirale um einen Rotationswinkel von 120 ° - 360 °, insbesondere von 255 ° - 315 °, insbesondere von 270 °, geöffnet bleibt.

Vorzugsweise wird der in der Gegenkammer herrschende Druck aufgrund eines vom Hochdruckbereich in die Gegenkammer strömenden Massenstroms und aufgrund eines von einer der Verdichtungskammern in die Gegenkammer strömenden Massenstroms gebildet.

Hinsichtlich weiterer Ausbildungen des erfindungsgemäßen Verfahrens wird auf vorherige Erläuterungen verwiesen, insbesondere auf die Erläuterungen im Zusammenhang mit den Öffnungs- und/oder Schließungszeitpunkten bzw. der Öffnungsdauer des Durchgangs. Es ergeben sich ähnliche Vorteile, wie diese bereits im Zusammenhang mit der erfindungsgemäßen Verdrängermaschine angegeben sind.

Ein weiterer nebengeordneter Aspekt der Erfindung betrifft eine Fahrzeugklimaanlage mit einer erfindungsgemäßen Verdrängermaschine, insbesondere mit einem erfindungsgemäßen Scrollverdichter. Es ergeben sich ähnliche Vorteile, wie diese bereits im Zusammenhang mit der erfindungsgemäßen Verdrängermaschine angegeben sind.

Ein weiterer nebengeordneter Aspekt der Erfindung betrifft ein Fahrzeug, insbesondere ein Hybridfahrzeug, mit einer erfindungsgemäßen Verdrängermaschine und/oder mit einer erfindungsgemäßen Fahrzeugklimaanlage. Es ergeben sich ähnliche Vorteile, wie diese bereits im Zusammenhang mit der erfindungsgemäßen Verdrängermaschine angegeben sind. Insbesondere handelt es sich bei dem erfindungsgemäßen Fahrzeug um ein elektrisches Hybridfahrzeug.

Die Erfindung wird im Folgenden anhand von Ausführungsbeispielen unter Bezugnahme auf die beigefügten, schematischen Zeichnungen näher erläutert.

Darin zeigen:
- Fig. 1: eine Verdrängerspirale einer erfindungsgemäßen Verdrängermaschine in einer perspektivischen Draufsicht;
- Fig. 2: einen Längsschnitt einer erfindungsgemäßen Verdrängermaschine, insbesondere eines Scrollverdichters;
- Fig. 3: eine Draufsicht auf die Verdrängerspirale, die orbitierende Bewegungen in der Gegenspirale durchführt, wobei der Boden der Gegenspirale nicht dargestellt ist;
- Fig. 4: eine schematische Darstellung des Arbeitsprinzips der erfindungsgemäßen Verdrängermaschine;
- Fig. 5: eine Darstellung des Öffnungszeitraums des Durchgangs in Abhängigkeit des Rotationswinkels;
- Fig. 6: eine Darstellung des Drucks in der Verdichtungskammer in Abhängigkeit des Rotationswinkels sowie des gewählten Saugdrucks im Zusammenhang mit dem verwendeten Kältemittel R134a;
- Fig. 7: eine Darstellung von Ausstoßzyklen aus der Verdichtungskammer in die Hochdruckkammer und Darstellung der Öffnungsphasen des Durchgangs im Zusammenhang mit der Kältemittel R134a; und
- Fig. 8: eine Darstellung der Schließkraft in Relation zum Saugdruck und zu dem zu erzielenden Enddruck.

Im Folgenden werden für gleiche und gleichwirkende Teile dieselben Bezugsziffern verwendet.

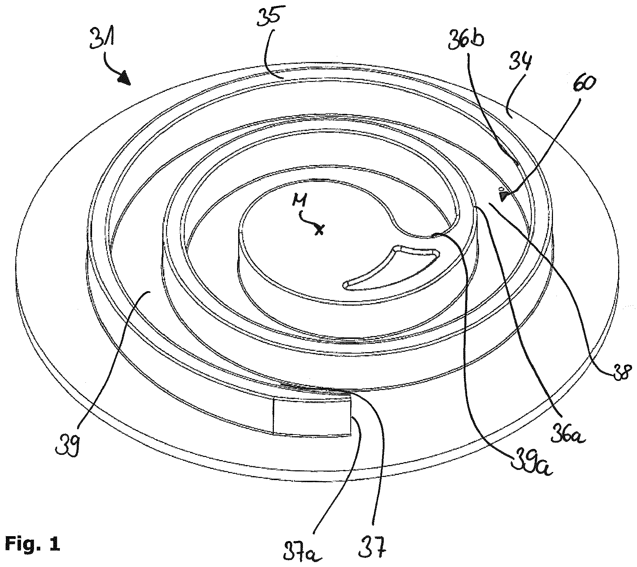

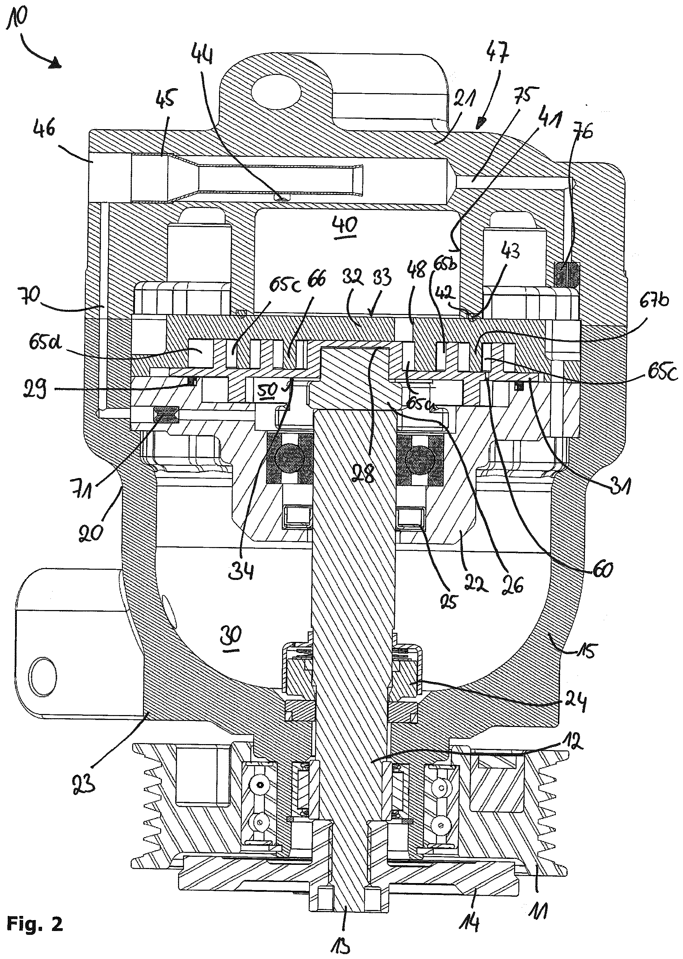

In Fig. 1 ist eine Verdrängerspirale 31 dargestellt, wie diese in einer erfindungsgemäßen Verdrängermaschine eingebaut sein kann. Insbesondere dient die Verdrängerspirale 31 zum Einbau in einen Scrollverdichter 10, wie dieser beispielsweise gemäß Ausführungsbeispiel der Fig. 2 ausgebildet sein kann.

Wie in Fig. 1 dargestellt, umfasst die Verdrängerspirale 31 einen Boden 34. Der Boden 34 kann auch als Rückwand der Verdrängerspirale 31 bezeichnet werden. Der Boden 34 ist kreisrund ausgebildet und hat die Form einer runden Platte. Auf dem Boden 34 ist eine Spirale 35 mit Spiralflankenabschnitten 36a und 36b ausgebildet.

Das Spiralelement 35 erstreckt sich ausgehend vom Mittelpunkt M der Verdrängerspirale 31 bis zu einem Anfangsbereich 37.

Im Boden 34 ist ein Durchgang 60 ausgebildet. Bei dem Durchgang 60 handelt es sich um eine Durchgangsbohrung, die zur Oberfläche des Bodens 34 im Wesentlichen senkrecht verläuft. Der Durchgang 60 ist dabei in einem mittleren Abschnitt 38 der Verdrängerspirale 31 ausgebildet. Der Durchgang 60 ist in einem Abschnitt des Bodens 34 ausgebildet, wobei der Durchgang 60 außermittig zwischen den Spiralflankenabschnitten 36a und 36b ausgebildet ist. Die Gesamtlänge des Spiralganges 39 ist ausgehend von der Öffnung 37a bis zum Endabschnitt 39a des Spiralgangs 39 definiert. Der Endabschnitt 39a ist der in Strömungsrichtung des Kältemittels letzte Abschnitt des Spiralganges 39. Im dargestellten Beispiel ist der Endabschnitt 39a gebogen ausgebildet.

Die gemäß Fig. 1 dargestellte Verdrängerspirale 31 ist in den Scrollverdichter 10 gemäß Ausführungsbeispiel der Fig. 2 eingebaut. Dieser Scrollverdichter 10 kann beispielsweise als Verdichter eine Fahrzeugklimaanlage wirken. Eine Fahrzeugklimaanlage, wie z.B. eine CO₂-Fahrzeugklimaanlage, weist typischerweise einen Gaskühler, einen inneren Wärmetauscher, eine Drossel, einen Verdampfer und einen Verdichter auf. Der Verdichter kann demnach der abgebildete Scrollverdichter 10 sein. Bei dem Scrollverdichter 10 handelt es sich mit anderen Worten um eine Verdrängermaschine nach dem Spiralprinzip.

Der dargestellte Scrollverdichter 10 weist einen mechanischen Antrieb 11 in Form einer Riemenscheibe auf. Die Riemenscheibe 11 ist im Gebrauch mit einem Elektromotor oder einem Verbrennungsmotor verbunden. Alternativ ist es möglich, dass der Scrollverdichter elektrisch oder elektromotorisch angetrieben wird.

Der Scrollverdichter 10 umfasst außerdem ein Gehäuse 20 mit einem oberen Gehäuseteil 21, das den Hochdruckbereich 47 des Scrollverdichters 10 verschließt. Im Gehäuse 20 ist eine Gehäusezwischenwand 22 ausgebildet, die eine Niederdruckkammer 30 begrenzt. Die Niederdruckkammer 30 kann auch als Saugraum bezeichnet werden.

Im Gehäuseboden 23 ist eine Durchtrittsöffnung ausgebildet, durch die sich eine Antriebswelle 12 erstreckt. Das außerhalb des Gehäuses 20 angeordnete Wellenende 13 ist drehfest mit dem Mitnehmer 14 verbunden, der in die am Gehäuse 20 drehbar gelagerte Riemenscheibe, d.h. in den mechanischen Antrieb 11 eingreift, so dass von der Riemenscheibe ein Drehmoment auf die Antriebswelle 12 übertragen werden kann.

Die Antriebswelle 12 ist einerseits im Gehäuseboden 23 und andererseits in der Gehäusezwischenwand 22 drehbar gelagert. Die Abdichtung der Antriebswelle 12 gegen den Gehäuseboden 23 erfolgt durch eine erste Wellendichtung 24 und gegen die Gehäusezwischenwand 22 durch eine zweite Wellendichtung 25.

Der Scrollverdichter 10 umfasst des Weiteren die Verdrängerspirale 31 und eine Gegenspiral 32. Die Verdrängerspirale 31 und die Gegenspirale 32 greifen ineinander ein. Die Gegenspirale 32 steht vorzugsweise sowohl in Umfangsrichtung als auch in radialer Richtung fest. Die mit der Antriebswelle 12 gekoppelte bewegliche Verdrängerspirale 31 beschreibt eine kreisförmige Bahn, so dass in an sich bekannter Weise durch diese Bewegung mehrere Gastaschen oder Verdichtungskammern 65a, 65b, 65c und 65d erzeugt werden, die zwischen der Verdrängerspirale 31 und der Gegenspirale 32 radial nach innen wandern.

Durch diese orbitierende Bewegung wird Arbeitsmedium, insbesondere ein Kältemittel, angesaugt, und mit der weiteren Spiralbewegung und der damit einhergehenden Verkleinerung der Verdichtungskammern 65a, 65b, 65c und 65d verdichtet. Das Arbeitsmedium, insbesondere das Kältemittel, wird von radial außen nach radial innen, beispielsweise linear zunehmend verdichtet und im Zentrum der Gegenspirale 32 in die Hochdruckkammer 40 ausgestoßen. Um eine orbitierende Bewegung der Verdrängerspirale 31 zu erzeugen ist ein Exzenterlager 26 ausgebildet, das mit der Antriebswelle 12 durch einen Exzenterstift verbunden ist. Das Exzenterlager 26 und die Verdrängerspirale 31 sind exzentrisch bezogen auf die Gegenspirale 32 angeordnet. Die Verdichtungskammern 65a, 65b, 65c und 65d sind durch Anlage der Verdrängerspirale 31 und die Gegenspirale 32 voneinander druckdicht getrennt.

Der Gegenspirale 32 ist in Strömungsrichtung die Hochdruckkammer 40 nachgeordnet und steht mit der Gegenspirale 32 in Fluidverbindung durch einen Auslass 48. Der Auslass 48 ist vorzugsweise nicht exakt im Mittelpunkt der Gegenspirale 32 angeordnet, sondern befindet sich außermittig im Bereich einer innersten Verdichtungskammer 65a, die zwischen der Verdrängerspirale 31 und der Gegenspirale 32 gebildet ist. Dadurch wird erreicht, dass der Auslass 48 nicht von der Lagerbuchse 28 abgedeckt wird und das endverdichtete Arbeitsmedium in die Hochdruckkammer 40 ausgestoßen werden kann.

Der Boden 33 der Gegenspirale 32 bildet abschnittsweise den Boden der Hochdruckkammer 40. Der Boden 33 ist breiter als die Hochdruckkammer 40. Die Hochdruckkammer 40 wird seitlich von der Seitenwand 41 begrenzt. In einem zu dem Boden 33 der Gegenspirale 32 weisenden Ende der Seitenwand 41 ist eine Ausnehmung 42 ausgebildet, in der ein Dichtring 43 angeordnet ist. Die Seitenwand 41 ist eine Umfangswand, die einen Anschlag der Gegenspirale 32 bildet. Die Hochdruckkammer 40 ist im oberen Gehäuseteil 21 ausgebildet. Diese weist einen rotationssymmetrischen Querschnitt auf.

Das in der Hochdruckkammer 40 gesammelte verdichtete Arbeitsmedium, nämlich das Kältegas, strömt durch einen Auslass 44 aus der Hochdruckkammer 40 in einen Ölabscheider 45, der vorliegend als Zyklon-Abscheider ausgebildet ist. Das verdichtete Arbeitsmedium, nämlich das verdichtete Kältegas, strömt durch den Ölabscheider 45 und die Öffnung 46 in den Kreislauf der beispielhaften Klimaanlage.

Die Steuerung des Anpressdrucks der Verdrängerspirale 31 auf die Gegenspirale 32 wird dadurch verwirklicht, dass ein Boden 34 der Verdrängerspirale 31 mit einem entsprechenden Druck beaufschlagt wird. Dazu ist eine Gegendruckkammer 50, die auch als Back-Pressure-Raum bezeichnet werden kann, ausgebildet. In der Gegendruckkammer 50 ist das Exzenterlager 26 befindlich. Die Gegendruckkammer 50 wird durch den Boden 34 der Verdrängerspirale 31 und durch die Gehäusezwischenwand 22 begrenzt.

Die Gegendruckkammer 50 ist durch die bereits beschriebene zweite Wellendichtung 25 von der Niederdruckkammer 30 fluiddicht getrennt. Ein Dichtund Gleitring 29 sitzt in einer Ringnut in der Gehäusezwischenwand 22. Die Verdrängerspirale 31 stützt sich deshalb in axialer Richtung auf dem Dicht- und Gleitring 29 ab und gleitet auf diesem.

Wie in Fig. 2 ebenfalls zu erkennen ist, kann der Durchgang 60 der Verdrängerspirale 31 zumindest temporär eine Fluidverbindung zwischen der Gegendruckkammer 50 und der dargestellten Verdichtungskammer 65a herstellen.

Das Spiralelement 66 der Gegenspirale 32, insbesondere der Spiralflankenabschnitt 67b kann den Durchgang 60 temporär verschließen. Mit anderen Worten wird der Durchgang 60 durch entsprechende Verschiebung in Relation zu dem Spiralflankenabschnitt 67b freigegeben, so dass ein Arbeitsmedium von den Verdichtungskammern 65a oder 65b oder 65c in Richtung der Gegendruckkammer 50 strömen kann.

Wie in Fig. 2 des Weiteren dargestellt ist, ist vom Hochdruckbereich 47 der Verdrängermaschine bzw. des Scrollverdichters 10 zur Gegendruckkammer 50 eine Gasverbindungsleitung 70 ausgebildet. Diese Gasverbindungsleitung 70 ist nach dem Ölabscheider 45 ausgebildet, so dass durch die Gasverbindungsleitung 70 tatsächlich nur Gas und kein Öl transportiert wird. In der Gasverbindungsleitung 70 ist eine Drossel 71 ausgebildet.

In einer alternativen (nicht dargestellten) Ausbildung der Erfindung kann eine Gasverbindungsleitung in der Gegenspirale 32 ausgebildet sein. Eine derartige Gasverbindungsleitung kann eine Verbindung von der Hochdruckkammer 40 zur Gegendruckkammer 50 herstellen.

Es ist zu erwähnen, dass keine Fluidverbindung von der Gegendruckkammer 50 zur Niederdruckkammer 30 hergestellt ist. Der Massenstrom kann nicht von der Gegendruckkammer 50 in die Niederdruckkammer 30 gelangen.

Wie in Fig. 2 weiterhin angedeutet wird, ist vom Hochdruckbereich 47 ausgehend ein Ölrückführungskanal 75 mit einer Drossel 76 ausgebildet. Ein derartiger Ölrückführungskanal 75 stellt eine Verbindung vom Hochdruckbereich 47 zur Niederdruckkammer 30 her, um die Ölrückführung zu gewährleisten. Es kann somit eine getrennte Ölrückführung und eine getrennte Gasrückführung realisiert werden.

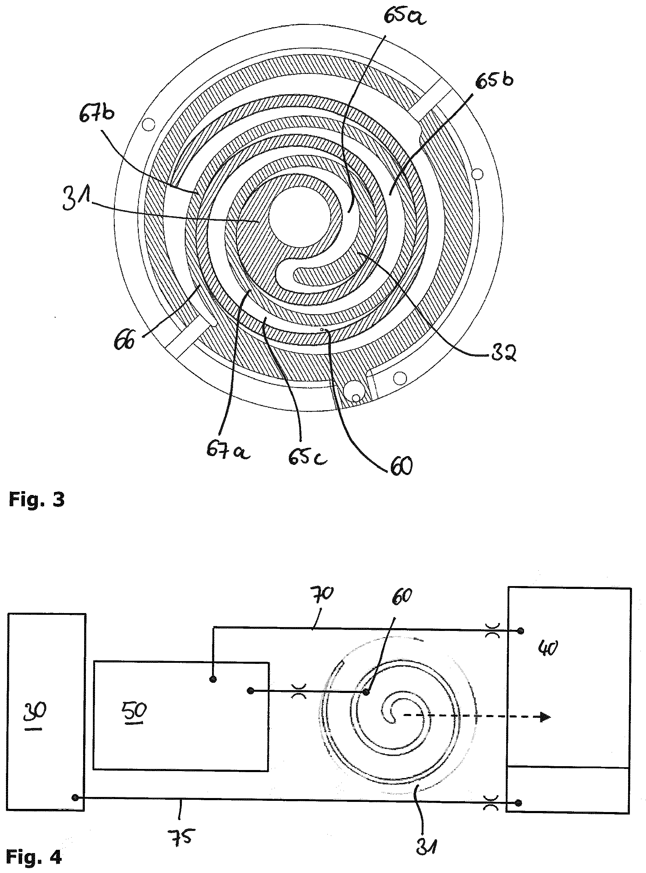

Mit Hilfe des erfindungsgemäßen Scrollverdichters bzw. mit Hilfe der Verwendung der in Fig. 1 beispielhaft dargestellten Verdrängerspirale 31 kann ein variables Back-Pressure-System, d.h. ein variables Gegendruckkammer-System konstruiert werden. Dies wird u.a. aufgrund der Anordnung des Durchgangs 60 begründet. Es ergeben sich, je nach Zeitpunkt des Verdichtungsprozesses, verschiedene Positionen der Spiralen 31 und 32 zueinander, so dass, wie dies in Fig. 3 dargestellt ist, der Durchgang 60 frei sein kann, und eine Fluidverbindung von der Verdichtungskammer zur Gegendruckkammer 50 herstellbar ist.

In Fig. 3 ist eine Ansicht auf die Verdrängerspirale 31 von oben dargestellt, wobei das Spiralelement 66 bzw. die Spiralflankenabschnitte 67a, 67b der Gegenspirale 32 zu erkennen sind. Der Boden 33 der Gegenspirale 32 ist in Fig. 3 jedoch nicht zu erkennen.

Der Durchgang 60 ist nicht verschlossen, d.h. das Spiralelement 66 der Gegenspirale 32 deckt den Durchgang 60 nicht ab. Aufgrund der Öffnung des Durchgangs 60 ist eine Fluidverbindung zwischen der Verdichtungskammer 65c zur Gegendruckkammer 50 herstellbar.

In Fig. 4 ist schematisch das Grundprinzip der erfindungsgemäßen Verdrängermaschine dargestellt. Zu erkennen sind die Niederdruckkammer bzw. Saugkammer 30, die Hochdruckkammer 40 sowie die Gegendruckkammer bzw. der Back-Pressure-Raum 50. Zwischen der Hochdruckkammer 40 und der Niederdruckkammer 30 ist ein Ölrückführungskanal 75 ausgebildet. Die Ölrückführung erfolgt demnach ausschließlich zwischen der Hochdruckkammer 40 und der Niederdruckkammer 30. Davon getrennt ist die Gasverbindungsleitung 70 zwischen der Hochdruckkammer 40 und der Gegendruckkammer 50 ausgebildet. Ebenfalls zu erkennen ist der Durchgang 60 der Verdrängerspirale 31. Aufgrund des ausgebildeten Durchgangs 60 ist eine Verbindung von einer der Verdichtungskammern zur Gegendruckkammer 50 möglich.

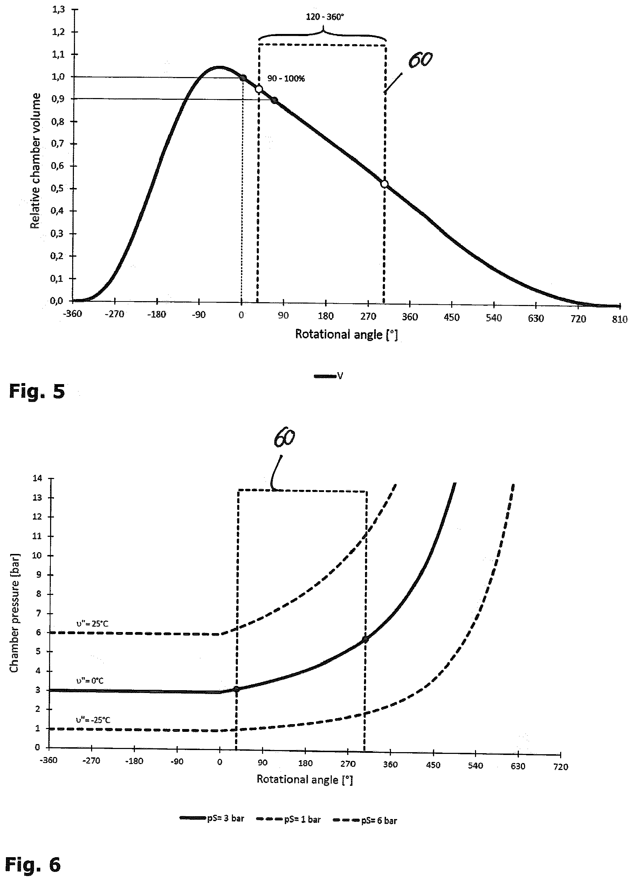

In Fig. 5 ist eine Volumenänderungskurve eines Scrollverdichters dargestellt. Diese Volumenänderungskurve ist prinzipiell für alle Scrollverdichter in etwa gleich und unabhängig von dem verwendeten Kältemittel. Der Rotationswinkel (rotational angle) 0 ° zeigt dabei den Beginn des Verdichtungsprozesses in einem Scrollverdichter. Zu erkennen ist außerdem ein gestrichelter Graph, mit im Wesentlichen rechteckiger Form. Dieser stellt dabei dar, zu welchen Zeitpunkten des Verdichtungsprozesses abhängig vom relativen Volumen in der Verdichtungskammern (relative chamber volume) der Durchgang 60 geöffnet ist. Es ist zu erkennen, dass der erste Durchgang 60 in einem derartigen Abschnitt, insbesondere in einem derartigen Bodenabschnitt, der Verdrängerspirale 31 ausgebildet ist, indem der Durchgang 60 im aktivierten Zustand der Verdrängerspirale bei Erreichen von 90 % - 100 %, insbesondere von 95 %, des relativen Verdichtungskammervolumens geöffnet ist und anschließend nach dem Öffnen während einer darauffolgenden Rotation der Verdrängerspirale 31 um einen Rotationswinkel von 120 ° - 360 °, insbesondere um einen Rotationswinkel von 270 °, geöffnet bleibt. Der Durchgang 60 wird im vorliegenden Fall bei einem Rotationswinkel von 35 ° geöffnet. Die Schließung des Durchgangs 60 erfolgt hingegen bei einem Rotationswinkel von 305 °.

In Fig. 6 ist ebenfalls der Öffnungszeitraum des Durchgangs 60 dargestellt. Die Darstellung entspricht einem Scrollverdichter 10, wobei R134a als Kältemittel verwendet wird. Die dargestellten Graphen sind kältemittelabhängig. Die Graphen sind des Weiteren für unterschiedliche Saugdrücke (pS) von 1 bar, 3 bar und 6 bar dargestellt. Zu erkennen ist das Verhalten des Druckes in der Verdichtungskammer (chamber pressure) in Abhängigkeit des Rotationswinkels (rotational angle). Bei einem Saugdruck bzw. Niederdruck von 1 bar verläuft die Verdichtungskurve zum Öffnungszeitpunkt des Durchgangs 60 relativ flach, wohingegen die Verdichtungskurve bei einem Saugdruck von 6 bar im betreffenden Zeitraum relativ steil verläuft. Die Saugdrücke 1 bar, 3 bar und 6 bar stehen für die jeweiligen Sättigungstemperaturen/Verdampfungstemperaturen υ" -25 °C, 0 °C und 25 °C. Ein standardmäßiger Scrollverdichter muss in Fahrzeugklimaanlagen in diesen Temperaturbereichen von -25 °C bis +25 °C entsprechende Temperaturen bereitstellen, so dass der Saugdruck (pS) in einem Bereich von 1 bar - 6 bar variiert.

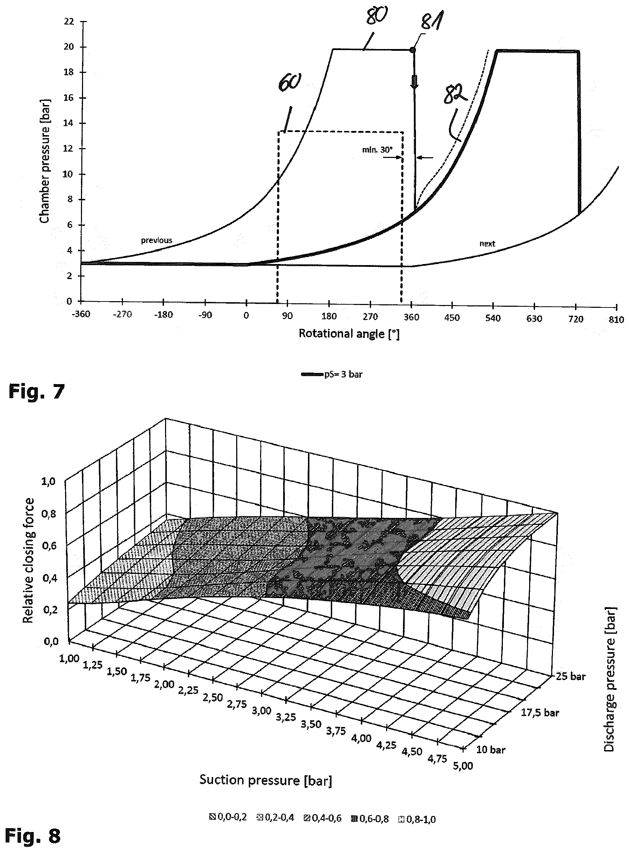

In Fig. 7 werden wiederum Graphen abgebildet, welche Drücke in der Verdichtungskammer (chamber pressure) in Abhängigkeit des Rotationswinkels (rotationale angle) darstellen. Mit einer dicken durchgezogenen Linie wird dabei der aktuelle Verdichtungszyklus dargestellt. Mit dünneren Linien werden der vorherige (previous) Zyklus sowie der darauffolgende (next) Zyklus angedeutet. In Bezug auf den aktuellen Verdichtungszyklus ist außerdem die Öffnungsdauer (gestrichelte Linie) des Durchgangs 60 dargestellt.

Es ist zu erkennen, dass ein Verdichtungsdruck von 20 bar erzielt wird, wobei der abgeflachte obere Teil des Graphen die Ausstoßgrenze 80 beschreibt. An dieser Grenze 80 wird das verdichtete Gas in die Hochdruckkammer 40 ausgestoßen. Der Ausstoß erfolgt in einem Rotationswinkel von ca. 180 ° - 360 °. Der Graph deutet des Weiteren den sogenannten Ausschiebewinkel (discharge angle) 81 an. Dieser discharge angle 81 betrifft den Zeitpunkt, zu dem das letzte verdichtete Gas in die Hochdruckkammer ausgestoßen wurde und anschließend schlagartig der Druck in der Verdichtungskammer abnimmt. Das in der Verdichtungskammer verdichtete Gas wird nicht vollständig ausgestoßen. Es verbleibt ein restliches Gas in der Verdichtungskammer. Dieses darf jedoch nicht in die Gegendruckkammer 50 ausgestoßen werden, so dass die erste Öffnung 60 vor Erreichen des discharge angles 81 geschlossen werden muss. Gemäß Fig. 7 ist der erste Durchgang 60 mindestens 30 ° vor Erreichen des discharge angles 81 zu schließen.

Die Fläche 82, die zwischen dem Graphen des aktuellen Verdichtungszyklus und einer darüber befindlichen gestrichelten Linie gebildet ist, stellt das restliche Gas des vorherigen Verdichtungszyklus dar, das nicht in die Hochdruckkammer ausgestoßen wurde.

In Fig. 8 wird eine Fläche dargestellt, die die relative Schließkraft (relative closing force) betreffend die Verdrängerspirale 31 sowie die Gegenspirale 32 darstellt. Diese ist in Abhängigkeit des Saugdrucks (suction pressure) und des zu erzielenden Enddruckes (discharge pressure) dargestellt. Es wird klar, dass mit steigendem Enddruck auch die Schließkraft erhöht sein muss. Die Darstellung der Fig. 8 betrifft wiederum einen Scrollverdichter, der mit dem Arbeitsmittel R134a betrieben wird. Tatsächlich werden zur Sicherheit höhere Schließkräfte erzeugt, als diese in der Fig. 8 dargestellt sind.

### Bezugszeichenliste

- 10: Scrollverdichter
- 11: Mechanischer Antrieb
- 12: Antriebswelle
- 13: Wellenende
- 14: Mitnehmer
- 15: Umfangswandung
- 20: Gehäuse
- 21: Oberes Gehäuseteil
- 22: Gehäusezwischenwand
- 23: Gehäuseboden
- 24: Erste Wellendichtung
- 25: Zweite Wellendichtung
- 26: Exzenterlager
- 28: Lagerbuchse
- 29: Gleitring
- 30: Niederdruckkammer
- 31: Verdrängerspirale
- 32: Gegenspirale
- 33: Boden Gegenspirale
- 34: Boden Verdrängerspirale
- 35: Spiralelement
- 36a, 36b: Spiralflankenabschnitt
- 37: Anfangsbereich
- 37a: Öffnung
- 38: Mittlerer Abschnitt
- 39: Spiralgang
- 39a: Endabschnitt
- 40: Hochdruckkammer
- 41: Seitenwand
- 42: Ausnehmung
- 43: Dichtring
- 44: Auslass
- 45: Ölabscheider
- 46: Öffnung
- 47: Hochdruckbereich
- 48: Auslass
- 50: Gegendruckkammer
- 60: Durchgang
- 65a, 65b, 65c, 65d: Verdichtungskammer
- 66: Spiralelement
- 67a, 67b: Spiralflankenabschnitt
- 70: Gasverbindungsleitung
- 71: Drossel
- 75: Ölrückführungskanal
- 76: Drossel
- 80: Ausstoßgrenze
- 81: Ausschiebewinkel (discharge angle)
- 82: Fläche
- M: Mittelpunkt Verdrängerspirale

## Patentansprüche

1. Verdrängermaschine nach dem Spiralprinzip, insbesondere Scrollverdichter (10), mit einem Hochdruckbereich (47), der eine Hochdruckkammer (40) umfasst, einer Niederdruckkammer (30) und einer orbitierenden Verdrängerspirale (31), die in eine Gegenspirale (32) derart eingreift, dass zwischen der Verdrängerspirale (31) und der Gegenspirale (32) Verdichtungskammern (65a, 65b, 65c, 65d) gebildet werden, um ein Arbeitsmedium aufzunehmen, wobei zwischen der Niederdruckkammer (30) und der Verdrängerspirale (31) eine Gegendruckkammer (50) ausgebildet ist,
**dadurch gekennzeichnet, dass**
die Verdrängerspirale (31) lediglich einen Durchgang (60) aufweist, der zumindest temporär eine Fluidverbindung zwischen der Gegendruckkammer (50) und zumindest einer der Verdichtungskammern (65a, 65b, 65c, 65d) herstellt, wobei der Durchgang (60) in einem derartigen Abschnitt der Verdrängerspirale (31) ausgebildet ist, in dem der Durchgang (60) im aktivierten Zustand der Verdrängermaschine bei Erreichen von 85 % - 100 %, insbesondere von 90 % - 100 %, insbesondere von 95 %, des relativen Verdichtungskammervolumens geöffnet ist und während einer nach Öffnung anschließenden Rotation der Verdrängerspirale (31) um einen Rotationswinkel von 120 ° - 360 °, insbesondere von 255 ° - 315 °, insbesondere von 270 °, geöffnet bleibt, wobei vom Hochdruckbereich (47) der Verdrängermaschine zu der Gegendruckkammer (50) eine Gasverbindungsleitung (70) ausgebildet ist.

2. Verdrängermaschine nach Anspruch 1,
**dadurch gekennzeichnet, dass**
die Gegendruckkammer (50) nicht mit der Niederdruckkammer (30) fluidverbunden ist.

3. Verdrängermaschine nach Anspruch 1 oder 2,
**dadurch gekennzeichnet, dass**
der Durchgang (60) in einem Abschnitt des Bodens (34) der Verdrängerspirale (31) ausgebildet ist.

4. Verdrängermaschine nach einem der Ansprüche 1 bis 3,
**dadurch gekennzeichnet, dass**
der Durchgang (60) mindestens bei einem Rotationswinkel von 10 °, insbesondere von mindestens 20 °, insbesondere von mindestens 30 °, vor Erreichen des Ausschiebewinkels (discharge angle), geschlossen ist.

5. Verdrängermaschine nach einem der vorhergehenden Ansprüche,
**dadurch gekennzeichnet, dass**
die Gasverbindungsleitung (70) im Gehäuse (20) ausgebildet ist und die Hochdruckkammer (40) mit der Gegendruckkammer (50) verbindet.

6. Verdrängermaschine nach einem der vorhergehenden Ansprüche,
**dadurch gekennzeichnet, dass**
vom Hochdruckbereich (47) der Verdrängermaschine zur Niederdruckkammer (60) ein Ölrückführungskanal (75) ausgebildet ist.

7. Verfahren zum Betreiben einer Verdrängermaschine nach einem der Ansprüche 1 bis 6,
**dadurch gekennzeichnet, dass**
der Durchgang (60) bei Erreichen von 85 % - 100 %, insbesondere von 90 % - 100 %, insbesondere von 95 %, des relativen Verdichtungskammervolumens geöffnet wird und während einer nach Öffnung anschließenden Rotation der Verdrängerspirale (31) um einen Rotationswinkel von 120 ° - 360 °, insbesondere von 255 ° - 315 °, insbesondere von 270 °, geöffnet bleibt.

8. Verfahren nach Anspruch 7,
**dadurch gekennzeichnet, dass**
der in der Gegendruckkammer (50) herrschende Druck aufgrund eines vom Hochdruckbereich (47) in die Gegendruckkammer (50) strömenden Massenstroms und aufgrund eines von einer der Verdichtungskammern (65a, 65b, 65c, 65d) in die Gegendruckkammer (50) strömenden Massenstroms gebildet wird.

9. Fahrzeugklimaanlage mit einer Verdrängermaschine, insbesondere mit einem Scrollverdichter (10), nach einem der Ansprüche 1 bis 6.

10. Fahrzeug mit einer Verdrängermaschine nach einem der Ansprüche 1 bis 6 und/oder mit einer Fahrzeugklimaanlage nach Anspruch 9.

## Claims

1. A displacement machine according to the spiral principle, in particular a scroll compressor (10), with a high-pressure area (47) that comprises a high-pressure chamber (40), a low-pressure chamber (30) and an orbiting displacement spiral (31), which engages into a counterspiral (32) in such a way as to form compression chambers (65a, 65b, 65c, 65d) between the displacement spiral (31) and the counterspiral (32), so as to receive a working medium, wherein a backpressure chamber (50) is formed between the low-pressure chamber (30) and the displacement spiral (31),
**characterized in that**
the displacement spiral (31) has just one passageway (60), which at least temporarily establishes a fluid connection between the backpressure chamber (50) and at least one of the compression chambers (65a, 65b, 65c, 65d), wherein the passageway (60) is formed in a section of the displacement spiral (31) of the kind in which the passageway (60) is open in the activated state of the displacement machine upon reaching 85 % to 100 %, in particular 90 % to 100 %, in particular 95 %, of the relative displacement chamber volume, and remains open during a rotation of the displacement spiral (31) that follows the opening by a rotational angle of 120° to 360°, in particular of 255° to 315°, in particular of 270°, wherein a gas connection line (70) is formed from the high-pressure area (47) of the displacement machine to the backpressure chamber (50).

2. The displacement machine according to claim 1, **characterized in that**
the backpressure chamber (50) is not fluidically connected with the low-pressure chamber (30).

3. The displacement machine according to claim 1 or 2, **characterized in that**
the passageway (60) is formed in a section of the floor (34) of the displacement spiral (31).

4. The displacement machine according to one of claims 1 to 3,
**characterized in that**
the passageway (60) is closed at a rotational angle of 10°, in particular of at least 20°, in particular of at least 30°, before reaching the discharge angle.

5. The displacement machine according to one of the preceding claims,
**characterized in that**
the gas connection line (70) is formed in the housing (20) and connects the high-pressure chamber (40) with the backpressure chamber (50).

6. The displacement machine according to one of the preceding claims,
**characterized in that**
an oil return channel (75) is formed from the high-pressure area (47) of the displacement machine to the low-pressure chamber (60).

7. A method for operating a displacement machine according to one of claims 1 to 6,
**characterized in that**
the passageway (60) is opened upon reaching 85 % to 100 %, in particular 90 % to 100 %, in particular 95 %, of the relative compression chamber volume, and remains open during a rotation of the displacement spiral (31) that follows the opening by a rotational angle of 120° to 360°, in particular of 255° to 315°, in particular of 270°.

8. The method according to claim 7,
**characterized in that**
the pressure prevailing in the backpressure chamber (50) is generated by a mass flow streaming from the high-pressure area (47) into the backpressure chamber (50) and by a mass flow streaming from one of the compression chambers (65a, 65b, 65c, 65d) into the backpressure chamber (50).

9. A vehicle air conditioning system with a displacement machine, in particular with a scroll compressor (10), according to one of claims 1 to 6.

10. A vehicle with a displacement machine according to one of claims 1 to 6 and/or with a vehicle air conditioning system according to claim 9.

## Revendications

1. Compresseur volumétrique selon le principe de la spirale, en particulier compresseur rotatif à spirale (10), avec une zone de haute pression (47), qui comprend une chambre de haute pression (40), une chambre de basse pression (30) et une spirale mobile (31) orbitale, qui vient en prise dans une contre-spirale (32) de telle manière qu'entre la spirale mobile (31) et la contre-spirale (32) sont formées des chambres de compression (65a, 65b, 65c, 65d) pour recevoir un milieu de travail, sachant qu'entre la chambre de basse pression (30) et la spirale mobile (31) est constituée une chambre de contre-pression (50)
**caractérisé en ce que**
la spirale mobile (31) comporte seulement un passage (60) qui établit au moins temporairement une liaison de fluide entre la chambre de contre-pression (50) et au moins une des chambres de compression (65a,65b,65c,65d), sachant que le passage (60) est constitué dans une section de ce genre de la spirale mobile (31) dans laquelle le passage (60) est ouvert à l'état activé du compresseur volumétrique en atteignant les 85 % - 100 %, en particulier 90 % - 100 %, en particulier 95 % du volume de la chambre de compression relatif et reste ouvert d'un angle de rotation de 120° - 360°, en particulier de 255 - 315 %, en particulier de 270°, pendant une rotation de la spirale mobile (31) consécutivement à l'ouverture, sachant qu'une conduite de liaison de gaz (70) est constituée de la zone de haute pression (47) du compresseur volumétrique à la chambre de contre-pression (50).

2. Compresseur volumétrique selon la revendication 1, **caractérisé en ce que**
la chambre de contre-pression (50) n'est pas reliée en fluide à la chambre de basse pression (30).

3. Compresseur volumétrique selon la revendication 1 ou 2, **caractérisé en ce que**
le passage (60) est constitué dans une section du fond (34) de la spirale mobile (31).

4. Compresseur volumétrique selon l'une quelconque des revendications 1 à 3,
**caractérisé en ce que**
le passage (60) est fermé au moins à un angle de rotation de 10°, en particulier d'au moins 20°, en particulier d'au moins 30°, avant d'atteindre l'angle de décharge.

5. Compresseur volumétrique selon l'une quelconque des revendications précédentes,
**caractérisé en ce que**
la conduite de liaison de gaz (70) est constituée dans le boîtier (20) et relie la chambre de haute pression (40) à la chambre de contre-pression (50).

6. Compresseur volumétrique selon l'une quelconque des revendications précédentes,
**caractérisé en ce qu'**
un conduit de retour d'huile (75) est constitué de la zone de haute pression (47) du compresseur volumétrique à la chambre de basse pression (60).

7. Procédé de fonctionnement d'un compresseur volumétrique selon l'une quelconque des revendications 1 à 6, **caractérisé en ce que**
le passage (60) est ouvert en atteignant les 85 % - 100 %, en particulier les 90 % - 100 %, en particulier les 95 %, du volume de la chambre de compression relatif et reste ouvert d'un angle de rotation de 120° - 360°, en particulier de 255° - 315°, en particulier de 270°, pendant une rotation de la spirale mobile (31) consécutivement à l'ouverture.

8. Procédé selon la revendication 7,
**caractérisé en ce qu'**
la pression régnant dans la chambre de contre-pression (50) est formée en raison d'un flux massique s'écoulant de la zone de haute pression (47) dans la chambre de contre-pression (50) et en raison d'un flux massique s'écoulant d'une des chambres de compression (65a,65b,65c,65d) dans la chambre de contre-pression (50) .

9. Climatisation de véhicule avec un compresseur volumétrique, en particulier avec un compresseur rotatif à spirale (10), selon l'une quelconque des revendications 1 à 6.

10. Véhicule avec un compresseur volumétrique selon l'une quelconque des revendications 1 à 6, et/ou avec une climatisation de véhicule selon la revendication 9.
